# EUROPÄISCHE PATENTSCHRIFT

(11) **EP 1 731 790 B1**
(45) Veröffentlichungstag und Bekanntmachung des Hinweises auf die Patenterteilung: **15.12.2010**
(21) Anmeldenummer: 06011455.0
(22) Anmeldetag: 02.06.2006
(51) Int. Cl.: F16D 65/50

(54) **Manuelle Nachstellvorrichtung für Feststellbremse**
Manual adjuster for parking brake
Dispositif de rattrapage de jeu manuelle pour frein de stationnement

(30) Priorität: 10.06.2005 DE 102005026873
(43) Veröffentlichungstag der Anmeldung: 13.12.2006
(73) Patentinhaber: GM Global Technology Operations, Inc., Detroit, MI 48265-3000 (US)
(72) Erfinder: Radacki, Andreas, 65439 Flörsheim (DE)
(74) Vertreter: Spitzfaden, Ralf

(56) Entgegenhaltungen:
- GB-A- 722 043
- US-A- 1 609 527
- US-A- 2 001 239
- US-A- 2 015 881
- US-A- 2 452 717

## Beschreibung

Die vorliegende Erfindung liegt auf dem technischen Gebiet der Feststellbremsen und betrifft insbesondere eine manuelle Nachstellvorrichtung für eine Feststellbremse, insbesondere für Kraftfahrzeuge.

Moderne Kraftfahrzeuge sind üblicherweise mit einer Nachstellvorrichtung für eine Feststellbremse ausgestattet, durch welche der Abstand ("Lüftspiel") zwischen Bremsbelag und Bremstrommel bzw. Bremsscheibe nachgestellt (verringert) werden kann, da das Lüftspiel während des Gebrauchs eines Kraftfahrzeugs aufgrund von Verschleiß von der Bremsreibung ausgesetzten Bauteilen sowie einer Längung des Bremszugs allmählich zunimmt.

Zur Nachstellung des Lüftspiels von Feststellbremsen werden in Kraftfahrzeuge (Kfz) manuelle und automatische Nachstellvorrichtungen eingebaut, wobei die letzteren den Vorteil haben, dass eine automatische Nachstellung stets dann erfolgt, wenn das Lüftspiel voreinstellbare Schwellwerte übersteigt, ohne dass der Fahrzeugnutzer selbst eine entsprechende Nachstellung durchführen muss beziehungsweise das Kraftfahrzeug zu diesem Zweck in einer Kfz-Werkstätte warten lässt. Jedoch sind automatische Nachstellvorrichtungen im Vergleich zu manuellen Einstellvorrichtungen in technischer Hinsicht wesentlich aufwändiger und deshalb mit höheren Anschaffungskosten verbunden. Vor allem um den Nachteil höherer Kosten zu vermeiden, werden weiterhin in großem Umfang manuelle Nachstellvorrichtungen in Kraftfahrzeuge eingebaut.

Bei herkömmlichen manuellen Nachstellvorrichtungen ist der Bremszug typischer Weise mit einer Gewindestange verbunden, welche in eine mit dem Bremshebel verbundene Schraubenmutter greift, so dass durch ein weiteres Eindrehen der Gewindestange in die Schraubenmutter die für die Kraftübertragung wirksame, effektive Länge des Bremszugs verkürzt werden kann. Jedoch sind auch die manuellen Nachstellvorrichtungen mit Nachteilen behaftet. Ein wesentlicher Nachteil ist vor allem darin zu sehen, dass für die Gewindestange ausreichend Platz, insbesondere in einer angezogenen (verschwenkten) Position des Bremshebels, bei welcher die Gewindestange mitgeschwenkt wird, vorgesehen werden muss. In der Praxis beträgt die Länge einer voll angezogenen Gewindestange beispielweise ca. 60 mm. Dies kann zur Folge haben, dass ein heckwärts verlaufender Luftkanal zur Belüftung des hinteren Bereichs der Fahrgastzelle, wie er in modernen Fahrzeugen oft vorgesehen ist, aufgrund des Platzbedarfs der Gewindestange nicht wie gewünscht geführt werden kann. Weiterhin kann ein Ablageraum in der Mittelkonsole in seiner Größe stark eingeschränkt sein, so dass bei bestimmten Fahrzeugmodellen mit großem Ablageraum in der Mittelkonsole ein Einbau einer herkömmlichen manuellen Nachstellvorrichtung gegebenenfalls nicht mehr möglich ist.

Die britische Patentanmeldung GB 790126 A beschreibt eine manuelle Nachstellvorrichtung für eine Feststellbremse mit einem verschwenkbaren Bremshebel zur manuellen Betätigung einer Radbremse und einem mit dem Bremshebel zusammenwirkenden Bremszug. Die Nachstellvorrichtung verfügt über eine relativ zum Bremshebel verschwenkbare Nachstelltrommel, an welchem der Bremszug befestigt ist. Die Nachstelltrommmel ist über eine verstellbare Sperrvorrichtung mit dem Bremshebel verbunden.

Demgegenüber besteht die Aufgabe der vorliegenden Erfindung darin, eine manuelle Nachstellvorrichtung für eine Feststellbremse, insbesondere für ein Kraftfahrzeug, anzugeben, mit welcher der vorgenannte Nachteil eines hohen Raumbedarfs für eine Gewindestange zum Nachstellen eines Bremszugs vermieden werden kann. Diese Aufgabe wird nach dem Vorschlag der Erfindung durch eine manuelle Nachstellvorrichtung für eine Feststellbremse mit den Merkmalen des unabhängigen Anspruchs gelöst. Vorteilhafte Ausgestaltungen der Erfindung sind durch die Merkmale der Unteransprüche angegeben.

Erfindungsgemäß ist eine manuelle Nachstellvorrichtung für eine Feststellbremse, insbesondere für ein Kraftfahrzeug, gezeigt, welche Feststellbremse in herkömmlicher Weise mit einem um eine Schwenkachse verschwenkbaren Bremshebel zur manuellen Betätigung einer oder mehrerer Radbremsen und einem mit dem Bremshebel zusammenwirkenden Bremszug (Bremsseil oder Bremsgestänge) ausgestattet ist, durch welchen beim Anziehen des Bremshebels (d. h. Verschwenken des Bremshebels in Richtung zum Anziehen der Feststellbremse) Zugkräfte auf die Radbremse übertragen werden können. Zu diesem Zweck wirkt der Bremszug so mit dem Bremshebel zusammen, dass der Bremszug beim Anziehen des Bremshebels mitgenommen wird.

Die erfindungsgemäße Nachstellvorrichtung für eine wie oben beschriebene Feststellbremse zeichnet sich in wesentlicher Weise dadurch aus, dass sie mit einem relativ zum Bremshebel verschwenkbaren Nachstellhebel versehen ist, an welchem der Bremszug befestigt ist. Hierbei ist der Nachstellhebel über eine verstellbare Sperrvorrichtung drehfest mit dem Bremshebel verbunden, so dass bei einem manuellen Anziehen des Bremshebels mittels des über die Sperrvorrichtung drehfest mit dem Bremshebel verbundenen Nachstellhebels sowie des daran befestigten Bremszugs die Radbremse angezogen werden kann. Die Sperrvorrichtung ist dabei mit beiden Hebeln, d. h. Bremshebel und Nachstellhebel, hebelseitig verbunden. Hierbei kann die relative Lage der beiden Hebel zueinander über eine Verstellung der verstellbaren Sperrvorrichtung verändert werden, d. h. durch eine Verstellung der Sperrvorrichtung kann der schwenkbare Nachstellhebel in einer bestimmten (wählbären) Schwenkposition relativ zum Bremshebel positioniert werden. Vorteilhaft und vorzugsweise ist der Nachstellhebel hierbei stufenlos relativ zum Bremshebel verstellbar. Der Nachstellhebel ist zu diesem Zweck vorteilhaft in einer solchen Schwenkposition relativ zum Bremshebel angeordnet, dass der Nachstellhebel bei einem Anziehen des Bremshebels dem Bremshebel nachläuft.

Durch die erfindungsgemäß vorgeschlagene Lösung ist es somit in vorteilhafter Weise möglich, auf eine in eine Schraubenmutter greifende Gewindestange zum Nachstellen des Bremszugs zu verzichten und die damit einher gehenden Nachteile zu vermeiden. Insbesondere kann ein sich heckwärts erstreckender Luftkanal im Wesentlichen unbeeinträchtigt geführt werden und vergleichsweise große Ablagen in Mittelkonsolen können ohne diesbezügliche Einschränkungen realisiert werden.

Bei einer bevorzugten, technisch einfach zu realisierenden Ausgestaltung der erfindungsgemäßen Nachstellvorrichtung sind der Bremshebel und der Nachstellhebel um eine gemeinsame Achse verschwenkbar gelagert. Da der Bremshebel im Allgemeinen drehfest mit seiner Schwenkachse verbunden ist, bedeutet dies, dass der Nachstellhebel um diese Schwenkachse drehbeweglich gelagert ist, um auf diese Weise zu gewährleisten, dass der Nachstellhebel relativ zum Bremshebel verschwenkbar ist.

Bei der erfindungsgemäßen Nachstellvorrichtung erfolgt eine Einstellung der Schwenkposition des Nachstellhebels relativ zum Bremshebel durch eine Längenverstellung der an den beiden Hebeln angebrachten Sperrvorrichtung. Eine solche Sperrvorrichtung ist so ausgebildet, dass diese eine in ein Innengewinde greifende Gewindeschraube umfasst, wobei die Gewindeschraube mit einem der beiden Hebel (d. h. Bremshebel oder Nachstellhebel) verbunden ist, während das Innengewinde mit dem anderen der beiden Hebel (d. h. Bremshebel oder Nachstellhebel) verbunden ist. Zu diesem Zweck istdie Gewindeschraube durch ein mit einem Durchgangsloch versehenen Durchgangslochelement geführt, das an einem der beiden Hebel drehbar angebracht ist, während das Innengewinde in einem an dem anderen der beiden Hebel drehbar angebrachten Innengewindeelement geformt ist. Eine drehbewegliche Anordnung von Durchgangslochelement und Innengewindeelement ist hierbei bevorzugt, da hierdurch in einfacher Weise ein Blockieren der Schwenkbewegung des Nachstellhebels vermieden werden kann.

Die Erfindung erstreckt sich ferner auf eine Feststellbremse mit einer wie oben beschriebenen Nachstellvorrichtung, insbesondere für eine Kraftfahrzeug, sowie auf ein Kraftfahrzeug, das mit einer solchen Feststellbremse ausgerüstet ist.

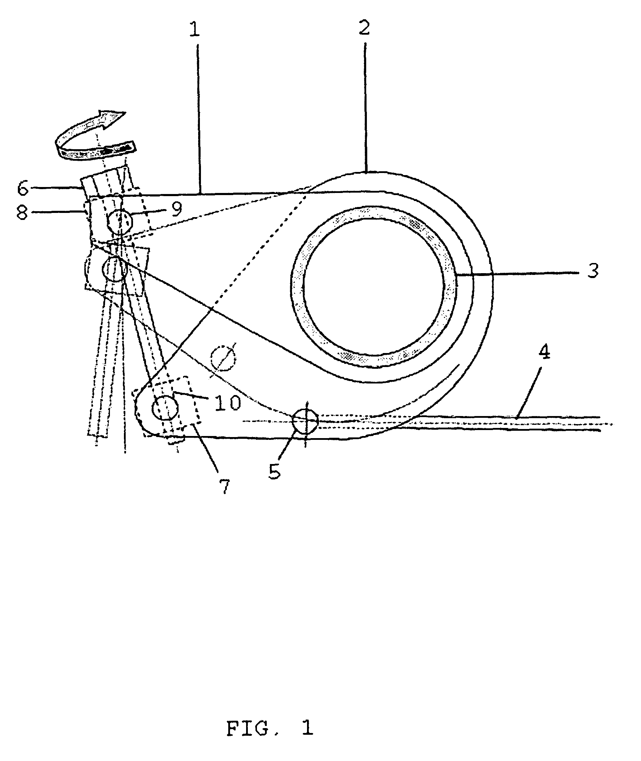

Die Erfindung wird nun anhand eines Ausführungsbeispiels näher erläutert, wobei Bezug auf die beigefügte Zeichnung genommen wird. Es zeigt
- Fig. 1: eine schematische Schnittansicht einer Ausfüh- rungsform einer erfindungsgemäßen Nachstellvor- richtung für eine Feststellbremse.

Es wird nun Bezug auf die Figur 1 genommen, worin eine Ausführungsform einer erfindungsgemäßen Nachstellvorrichtung für eine Feststellbremse in einer schematischen Schnittdarstellung dargestellt ist.

Demnach sind ein Bremshebel 1 und ein Nachstellhebel 2 um eine gemeinsame Schwenkachse 3 schwenkbar angeordnet, wobei der Bremshebel 1 drehfest mit der Schwenkachse 3 verbunden ist, während der Nachstellhebel 2 drehbeweglich mit der Schwenkachse 3 verbunden ist. Am Nachstellhebel 2 ist ein Bremszug 4, welcher in Form eines Bremsseils oder Bremsgestänges ausgebildet sein kann, an einer Befestigungsstelle 5 angebracht. Die Befestigungsstelle 5 ist so am Nachstellhebel 2 positioniert, dass der Bremszug 4 bei einem Verschwenken des Nachstellhebels 2 in einer zur Schwenkrichtung des Bremshebels beim Anziehen der Radbremse gleichen Schwenkrichtung (hier im Uhrzeigersinn) mitgenommen wird. Durch Mitnehmen des Bremszugs 4 kann eine (nicht dargestellte) Radbremse angezogen werden.

Der Nachstellhebel 2 ist mittels einer Sperrvorrichtung drehfest mit dem Bremshebel 1 verbunden. Die Sperrvorrichtung umfasst dabei eine Gewindeschraube 6, die durch ein Durchgangsloch 9 eines Durchgangslochelements 8 geführt ist, welches seinerseits an dem Bremshebel 1 befestigt oder mit diesem einstückig ausgebildet ist. Sie umfasst weiterhin ein Innengewindeelement 7 mit Innengewinde 10, in welches die Gewindeschraube 6 greift, welches Innengewindeelement an dem Nachstellhebel 2 befestigt oder mit diesem einstückig ausgebildet ist. Der Durchgangslochabschnitt 8 und der Innengewindeabschnitt 7 sind in der in Fig. 1 gezeigten Ausführungsform der erfindungsgemäßen Nachstellvorrichtung beispielhaft in Form eines Würfels ausgebildet, jedoch sind auch andere Formen in gleicher Weise möglich. Die Gewindeschraube 6 ist jedenfalls mit ausreichend Spiel durch das Durchgangsloch 9 hindurch geführt, so dass eine Drehung der Gewindeschraube 6 ermöglicht ist.

Durch obige Sperrvorrichtung sind die beiden Hebel gegeneinander versperrt, so dass bei einem Anziehen des Bremshebels 1, d. h. in Fig. 1 Verschwenken des Bremshebels 1 im Uhrzeigersinn, zum Anziehen der Radbremse der Nachstellhebel 2 mitgeführt und der am Nachstellhebel 2 befestigte Bremszug 4 mitgenommen wird.

Andererseits kann durch eine Drehung der Gewindeschraube 6 die Schwenkposition des Nachstellhebels 2 relativ zum Bremshebel 1 stufenlos verstellt werden. In Fig. 1 entspricht das Bezugszeichen 2 einer ersten Schwenkpositionen des Nachstellhebels 2 (durchgezogene Linie), in welcher die Gewindeschraube 6 nur wenig in das Innengewinde 10 eingedreht ist und die beiden Hebel einen vergleichsweise großen zwischenliegenden Winkel zueinander einnehmen, während mit dem Bezugszeichen 2' eine zweite Schwenkposition (gepunktete Linie) dargestellt ist, in welcher die Gewindeschraube 6 so weit als möglich in das Innengewinde 10 eingedreht ist und die beiden Hebel einen vergleichsweise kleinen zwischenliegenden Winkel zueinander einnehmen. Anders ausgedrückt wird der Nachstellhebel 2 durch Anziehen der Gewindeschraube 6 (in Fig. 1 in Pfeilrichtung) im Uhrzeigersinn relativ zum Bremshebel 1 verschwenkt, so dass bei unveränderter Schwenkposition des Bremshebels 1 ein Nachstellen des Bremszugs 4 ermöglicht ist. Eine Nachstellung des Bremszugs 4 ist bis zum Verschwenken des Nachstellhebels 2 in die mit dem Bezugszeichen 2' gekennzeichnete Position ermöglicht (maximale Nachstellposition). Um eine Blockierung der Schwenkbewegung des Nachstellhebels 2 zu vermeiden, können der Durchgangslochabschnitt 8 und der Innengewindeabschnitt 7 vorteilhaft jeweils drehbeweglich mit dem zugehörigen Hebel verbunden sein.

### Bezugszeichenliste

- 1: Bremshebel
- 2: Nachstellhebel
- 3: Schwenkachse
- 4: Bremszug
- 5: Bremszugbefestigungsstelle
- 6: Gewindeschraube
- 7: Innengewindeelement
- 8: Durchgangslochelement
- 9: Durchgangsloch
- 10: Innengewinde

## Patentansprüche

1. Manuelle Nachstellvorrichtung für eine Feststellbremse, insbesondere für ein Kraftfahrzeug, welche umfasst:
- einen um eine Schwenkachse (3) schwenkbaren, drehfest mit der Schwenkachse verbundenen Bremshebel (1) zur manuellen Betätigung wenigstens einer Radbremse,
- einen relativ zum Bremshebel verschwenkbaren, drehbeweglich auf der Schwenkachse (3) gelagerten Nachstellhebel (2) zum Nachstellen des Bremszugs,
- eine mit dem Bremshebel und dem Nachstellhebel verbundene, verstellbare Sperrvorrichtung (6, 7, 8), durch welche ein Verschwenken des Nachstellhebels relativ zum Bremshebel in einer durch Verstellen der Sperrvorrichtung verstellbaren Schwenkposition gesperrt ist, wobei die Sperrvorrichtung eine in ein Innengewinde (10) greifende Gewindeschraube (6) umfasst, wobei die Gewindeschraube mit einem der beiden Hebel (1, 2) und das Innengewinde mit dem anderen der beiden Hebel (1, 2) verbunden sind, wobei die Gewindeschraube durch ein mit einem Durchgangsloch (9) versehenen, an einem der beiden Hebel drehbar angebrachten Durchgangslochelement (8) geführt und das Innengewinde in einem an dem anderen der beiden Hebel drehbar angebrachten Innengewindeelement (7) geformt ist,- einen über die Sperrvorrichtung mit dem Bremshebel so zusammenwirkenden Bremszug (4), dass bei einer manuellen Betätigung des Bremshebels Zugkräfte auf die Radbremse übertragen werden können, wobei der Bremszug am Nachstellhebel befestigt ist,
wobei beim Anziehen des Bremshebels zum Anziehen der Radbremse der Nachstellhebel mitgeführt und der am Nachstellhebel befestigte Bremszug mitgenommen wird.

2. Nachstellvorrichtung nach Anspruch 1,
**dadurch gekennzeichnet, dass** der Nachstellhebel und der Bremshebel um eine gemeinsame Achse verschwenkbar sind.

3. Nachstellvorrichtung nach einem der vorhergehenden Ansprüche,
**gekennzeichnet durch** eine stufenlose Verstellbarkeit der Sperrvorrichtung.

4. Feststellbremse mit einer Nachstellvorrichtung nach einem der vorhergehenden Ansprüche.

5. Kraftfahrzeug mit einer Feststellbremse nach Anspruch 4.

## Claims

1. A manual adjuster for a parking brake, especially for a motor vehicle, which comprises:
- brake lever which can be pivoted about a pivot (3) and is connected in a torsion-proof manner with the pivot for the purpose of manual actuation of at least one wheel brake;
- an adjustment lever (2) for adjusting the brake cable, which adjustment lever is swivellable relative to the brake lever and is mounted in a rotatably movable manner on the pivot (3);
- an adjustable blocking apparatus (6, 7, 8) which is connected with the brake lever and the adjustment lever, by means of which a pivoting of the adjustment lever relative to the brake lever is blocked in a pivoting position adjustable by adjusting the blocking apparatus, with the blocking apparatus comprising a threaded screw (6) engaging in an internal thread (10), with the threaded screw being connected with one of the two levers (1, 2) and the internal thread with the other of the two levers (1, 2), with the threaded screw being guided through a through-hole element (8) which is provided with a through hole (9) and is rotatably attached to one of the two levers, and the internal thread is formed in one internal thread element (7) rotatably attached to the other of the two levers, a brake cable (4) cooperating via the blocking apparatus with the brake lever in such a way that in the case of a manual actuation of the brake lever tensile forces can be transmitted to the wheel brake, with the brake cable being fastened to the adjustment lever, with the adjustment lever being entrained during the pulling of the brake lever for pulling the wheel brake and the brake cable fastened to the adjustment lever being entrained.

2. An adjuster according to claim 1, **characterized in that** the adjustment lever and the brake lever can be swivelled about a common axis.

3. An adjuster according to one of the preceding claims, **characterized by** a continuous adjustability of the blocking apparatus.

4. A parking brake with an adjuster according to one of the preceding claims.

5. A motor vehicle with a parking brake according to claim 4.

## Revendications

1. Dispositif d'ajustement manuel pour un frein de stationnement, en particulier pour un véhicule à moteur, comprenant :
- un levier de frein (1) pouvant pivoter autour d'un axe de pivotement (3) et relié de manière fixe en rotation à l'axe de pivotement pour l'actionnement manuel d'au moins un frein de roue,
- un levier d'ajustement (2) pouvant pivoter par rapport au levier de frein et supporté de façon mobile en rotation sur l'axe de pivotement (3) pour l'ajustement du câble du frein,
- un dispositif de blocage (6, 7, 8) réglable relié au levier de frein et au levier d'ajustement, par lequel un pivotement du levier d'ajustement par rapport au levier de frein est bloqué dans une position de pivotement réglable par réglage du dispositif de blocage, le dispositif de blocage comprenant une vis filetée (6) qui se met en prise dans un filetage intérieur (10), la vis filetée étant reliée à l'un des deux leviers (1, 2) et le filetage intérieur à l'autre des deux leviers (1, 2), la vis filetée étant munie d'un trou traversant (9) sur lequel un élément à trou traversant (8) disposé avec possibilité de rotation sur l'un des deux leviers est guidé et le filetage intérieur étant formé dans un élément à filetage intérieur (7) disposé avec possibilité de rotation sur l'autre des deux leviers,
- un câble de frein (4) coopérant avec le levier de frein par l'intermédiaire du dispositif de blocage de telle façon que lors d'un actionnement manuel du levier des frein, des forces de traction puissent être exercées sur le frein de roue, le câble de frein étant fixé sur le levier d'ajustement,
dans lequel, lors de la traction sur le levier de frein pour serrer le frein de roue, le levier d'ajustement est entraîné en même temps et le câble de frein fixé au levier d'ajustement est entraîné en même temps.

2. Dispositif d'ajustement selon la revendication 1, **caractérisé en ce que** le levier d'ajustement et le levier de frein peuvent pivoter autour d'un axe commun.

3. Dispositif d'ajustement selon l'une des revendications précédentes, **caractérisé en ce que** le dispositif de blocage peut être réglé sans paliers.

4. Frein de stationnement avec un dispositif d'ajustement selon l'une des revendications précédentes.

5. Véhicule à moteur avec un frein de stationnement selon la revendication 4.
